# EUROPEAN PATENT SPECIFICATION

(11) **EP 3 568 715 B1**
(45) Date of publication and mention of the grant of the patent: **28.08.2024**
(21) Application number: 18702570.5
(22) Date of filing: 15.01.2018
(51) Int. Cl.: G01S 19/19, G01S 19/47, G01S 19/49, G01S 19/35

(54) **WEARABLE WIRELESS ELECTRONIC SPORTS DEVICE**
DRAHTLOSE ELEKTRONISCHE WEARABLE-SPORTVORRICHTUNG
DISPOSITIF SPORTIF ÉLECTRONIQUE SANS FIL PORTABLE

(30) Priority: 13.01.2017 NL 2018168
(43) Date of publication of application: 20.11.2019
(73) Proprietor: Team Absolute B.V., 6811 LA Arnhem (NL)
(72) Inventor: GIESEN, Harm Johannes, 6811 LA Arnhem (NL)
(74) Representative: van der Maarl, Arjan
(86) International application number: PCT/NL2018/050028
(87) International publication number: WO 2018/132012

(56) References cited:
- EP-A1- 1 992 389
- WO-A1-03/032516
- WO-A1-2012/045483
- WO-A1-2016/044831
- WO-A2-01/42809
- CN-A- 103 644 914
- US-A1- 2005 065 723
- US-A1- 2006 084 551
- US-A1- 2016 030 807
- US-A1- 2016 325 739

## Description

### FIELD OF THE INVENTION

The present invention is in the field of a wearable wireless sports device, such as for a bicycle. The device is capable of providing information relating to the sport and to the user of the device, such as velocity and distance travelled.

### BACKGROUND OF THE INVENTION

The present invention is in the field of a wearable wireless sports device. Wearable technology may be related to wearable computers or the like. In the recent past an effort has been made to enhance functionality of clothing and to create wearables as accessories able to provide users with monitoring an activity, typically by way of small wearable or portable personal device. Tracking information, such as movement, steps, and heart rate, are typical components of such activities. Examples of such a wearable devices are a wearable electronic watch/calculator and a hearing aid. These early devices function as standalone devices and are typically not accessible other than by functional buttons/knobs.

Tracking devices are known per se, such as for cars, which provide information on e.g. a location and speed of a vehicle. These device are however not very accurate (typically ±10 m), can not be used under shielded conditions, such as in tunnels or in a wood or forest, and may not be wearable. For cars this may typically not be much of an issue, but for wearables such is.

Satellite navigation systems have been available for quite some time. There are over 100 satellites orbiting the earth. These satellites are arranged in constellations of global navigation satellite systems (GNSS) that transmit extremely accurate time information. By comparing the signals received from typically four or more satellites, receivers can calculate their position on the earth in terms of latitude and longitude. Until recent only minor revisions to automotive satellite navigation have been made resulting in limitations in use, especially in view of accuracy and reliability, as well as in terms of integration of various aspects of technologies used. The limitations of the GNSS relate to e.g. extremely weak satellite signals. Because signals are so weak (typically a hundred times weaker than a home Wi-Fi signal) anything that interferes with the reception thereof, such as walls, tunnels, forests, garages, an open road lined with tall buildings, results in an inaccurate or no location "fix". In these scenarios a clear line-of-sight to the satellites is blocked and reflections of the signals may occur, which subsequently interfere with the signals coming directly from the satellite and hence making it even more complex to determine an exact position.

Various documents recite positioning devices.

WO 2016/044831 A1 recites a sensing system and wearable sensor platform described herein provide real-time feedback to a user/wearer of his power expenditure during an activity. The system may include an inertial measurement unit (IMU) for acquiring multi-axis motion data at a first sampling rate, and an orientation sensor to acquire orientation data at a second sampling rate that is varied based on the multi-axis motion data.

US 2016/030807 recites an exercise analysis system including a calculation unit which calculates exercise energy of a user, based on output of an inertial sensor which is put on the user; and a generation unit which generates exercise ability information which is information relating to an exercise ability of the user, based on the exercise energy, a running distance, and a running time.

WO2012/045483 A1 recites a system that is configured to be transported, carried or worn by a user, such as a portable personal training device or sports watch. The system comprises means for determining the location of the user, such as a GPS receiver, means for determining a motion state of the user, which may include an accelerometer, and can also utilise data obtained from a GPS receiver, means for determining the distance travelled by the user such that the system functions as an odometer.

WO01/42809 A2 recites a system for automatic monitoring real-time athletic performance of a user. A portable unit with a GPS receiver capable of providing GPS velocity data to a processor unit is able to provide an updated readout to a display unit, such as elevation gain, current speed, current heading, current elevation, calories burned, anticipated calories burned (based upon a pre-selected course), and others. It uses Doppler shift based GPS velocity measurements. The accuracy is limited to ±10 m, and only under un-shielded application.

EP 1 992 389 A1 recites a data logger for monitoring sports which includes an accelerometer, a gyro sensor to sense angular displacement, a GPS unit to sense position and velocity, a magnetometer to sense direction of movement, a heart rate monitor, and a controller programmed to manipulate the data and provide a display of the heart rate, speed, and other sport parameters. The data can be stored or transmitted to a remote computer for use by the coach.

WO03/032516 A1 recites a satellite positioning system receiver for location enabled wireless mobile communication devices having satellite signal receivers, and more particularly to reference oscillator circuits, combinations thereof and methods therefor. The method includes determining a change in cellular network based frequency error in a location enabled mobile wireless receiver having an oscillator.

US2006/084551 A recites a motivational fitness device, which controls the audio output of a television or audio component in response to the heart rate. A heart rate sensing device relays heart rate to a processor unit. The processor receives and compares the user's heart rate to the specified target range and sends control signals (or not) to the entertainment device.

None of the documents above recite full integration of various components, nor a waterproof body, and limited details for operating devices c.q. systems. In addition the devices are costly and/or not accurate, especially in shielded application thereof.

The present invention therefore relates to an improved wearable wireless electronic sports device, which solve one or more of the above problems and drawbacks of the prior art, providing reliable results, without jeopardizing functionality and advantages.

### SUMMARY OF THE INVENTION

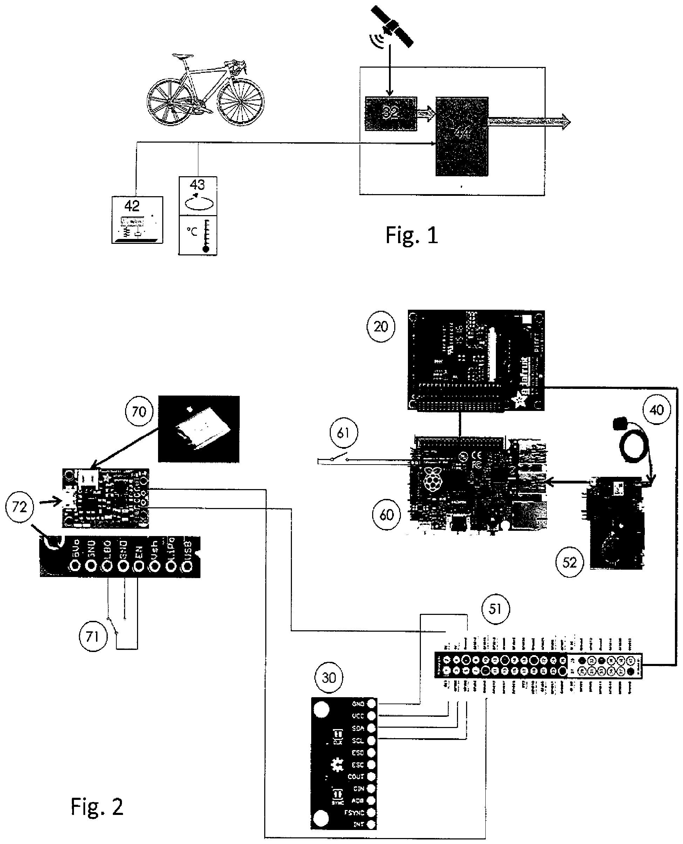

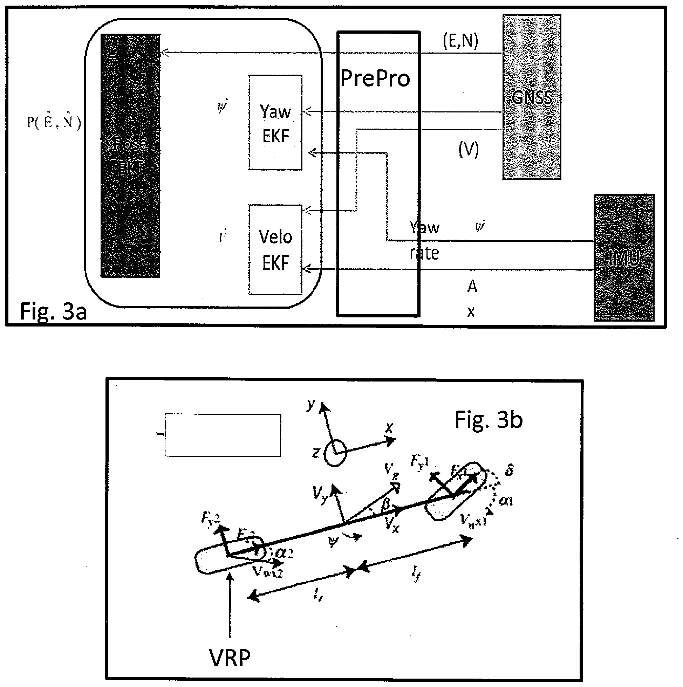

The present invention relates to a wearable wireless electronic sports device 100 according to claim 1. Therein use is made of signals transmitted by GNSS systems 32 (such as Glonass, GPS and Galileo) and received by a global positioning sensor, combined, hence fused, with a reliable and accurate inertial sensor 31. The outputs of the IMU and global positioning sensor are fused (see e.g. fig. 3a). This has led to a significant improvement in accuracy and reliability and in that limitations caused by poorly received signals are overcome. With reference to exemplary fig. 1 the present device comprises an integrated or global positioning sensor (also referred to as receiver or GNSS receiver) and fused therewith an inertial measurement unit (IMU) in a so-called dead reckoning device. The present system is considered to be an open system, in that further sensors, such as a camera, and further input, such as physical characteristics of an environment, can be coupled to the system. In order to process data quickly and reliably and to provide physical parameters, such as position, velocity, time, direction, and altitude, typically a filter 44 is provided. In electrical connection therewith is typically an accelerometer 42 and/or a gyroscope 43; the accelerometer and/or a gyroscope may be integrated with the above sensor and IMU. Information of a vehicle, such as a wheel speed of a bicycle, could be provided wireless to the present device; it is noted that typically cars rely on such data in order to provide accurate positioning data. On the contrary, the present device can calculate a distance covered without a need of having access to wheel speed information or an odometer. By this freeing of the present system a whole new range of applications is unleashed that can be used in any vehicle or by any user. This new approach may be referred to as Untethered Dead Reckoning (UDR); it combines all the sensor data together with that of the GNSS data. Integration of annular rates, specific forces, as e.g. identified in fig. 3b, as sensed by the IMU, the IMU preferably having a three (or more) axis gyroscope and a three (or more) axis accelerometer. The axes (if 3) are assumed to be orthogonal axes. Therewith position, velocity, attitude changes, acceleration, yaw, pitch roll, and position, amongst others, can be calculated. Integration of IMU and positioning sensor significantly reduces errors. Thereto also at least one filter is provided. An improved navigation performance is obtained, especially when no gnss signal is available. UDR is considered to facilitate a next level of tracking in situations where the GNSS signal quality is poor due to buildings and reflected multiple paths, or when it is lost completely such as in a tunnel. The present device is wearable and can be wireless connected to further devices, such as a smart phone. The present transceiver is also used to obtained detailed and accurate information with respect to locations of the one or more satellites of which the present device receives GNSS-input. In view of outdoor use the present device is incorporated in a weatherproof body 10, such as an IPxy, such as x=5 or 6, and y=6 or 7, hence very watertight and very particle tight. It is noted that a weatherproof body is different from electronics being provided with a resin or the like. In view of prolonged use a power source 70 is provided, such as a battery. The power source may be chargeable, such as wireless chargeable, or by conductance. A central processing unit 60 for processing data from the integrated circuit and for performing functions is provided, such as a Raspberry Pi. The present device is preferably integrated into one PCB. The processing unit comprises a transceiver for wireless communication with a remote device, such as a smart phone or a computer, a memory, such as for storing data and for pre-use configuring the device and the information displayed, a comparator for comparing physical changes, such as changes in speed, in altitude, in user power, in location, in distance, in user heart frequency, and in movement frequency, and a programming protocol, such as a user interface. Further the present device comprises a comparator for comparing physical changes, such as changes in speed, in altitude, in user power, in location, in distance, in user heart frequency, and in movement frequency. In the device, such as in the comparator or in the CPU, a vehicle model is present. For instance, in case of a bicycle a bicycle model is provided; the model is an advanced model for determining if parameters measured or changes therein are realistic, e.g. achievable by a cyclist. Therewith active filtering can be used to remove noise in this respect. In addition a dynamic model is present, which for instance will fix a location when a user of the device does not move; thereby GNSS information is ignored, which improves an accuracy with a few meters typically. In this latter respect the IMU may also be used, thus typically in combination, to determine absence or presence of movement. For wireless communicating with the present device a programming protocol, such as a user interface, is provided. The device optionally comprises a power booster, a magnetic compass, an accelerometer and/or a gyroscope, a damper, such as a mechanical damper or a damper of vibrations, a barometer for determining a relative height and inclination, and a thermometer. The magnetic compass may e.g. be used to align the internal IMU axes. The thermometer may be used to calibrate the IMU, and specifically the gyroscope and accelerometers thereof. As such a 9-axis sensor may be provided. A clock is provided for generating signals in a frequency range of 1-10.000 Hz. Further an antenna 40 is provided for receiving GNSS signals as well as for wireless communication (transceiving). The antenna (or likewise antennas) may operate at 1-5 GHz, such as 2000-3000 MHz, such as 2400 MHz-2524 MHz. For providing information to a user a display 20 is integrated in the body, typically a relatively small display. In order to attach the present device to a human being, a clothing, or a sports device such as a bicycle, a detachable fixing means is provided to the body of the present device.

With the present device very accurate positioning is possible; as a consequence also accurate and reliable determination of speed, acceleration, altitude, etc. is possible in real time, with a delay of 0-200 msec, such as 5-100 msec, such as at a frequency of 5-10 Hz, also under difficult circumstances as above. Each component may individually be configured as such, as well as the device as a whole. Most prior art devices calculate a trajectory on hindsight, typically a straight line, especially if for a given period no signal is received.

In a second aspect the present invention relates to a use of the present device for location determination within an accuracy of ±2 m or better in shielded locations, such as ±1.5 m, and within an accuracy of ±1 m or better in unshielded locations, such as ±0.7 m.

Thereby the present invention provides a solution to one or more of the above mentioned problems and drawbacks. Advantages of the present description are detailed throughout the description.

### DETAILED DESCRIPTION OF THE INVENTION

The present invention relates in a first aspect to a sports device according to claim 1.

In an exemplary embodiment of the present device a clock time of the global positioning sensor 32 and IMU 31 may be synchronized and/or provided with a time mark, preferably within 1Hz and/or within 10⁻³ sec. As such the outputs are synchronized within a very small timeframe, such as within 10⁻⁴ sec or even within 10⁻⁵ sec, and therefore represent an output generated at substantially the same time. Any latency is preferably < 10 ms, such as < 1 ms. The outputs with respect to time are fully consistent and can therefore be used together. As such the respective outputs may be provided with a time mark (actual year, month, day, hour, minutes, second and fraction thereof) and outputs with substantially the same time mark may be used together, or fused. The fused data provides the accuracies in location, velocity, yaw, pitch, roll, acceleration, height, etc.

In an exemplary embodiment of the present device acceleration output of the global positioning sensor 32 and IMU 31 may be fused, e.g. such as indicated in fig. 3a.

In an exemplary embodiment of the present device yaw output of the global positioning sensor 32 and IMU 31 may be fused. For a cyclist the yaw output is found to be sufficient to obtain the above accuracies (see also figs. 3a,b).

In an exemplary embodiment of the present device the comparator may be adapted to compare an actual fused output of the global positioning sensor 32 and IMU 31 with a previously predicted value for the output, wherein the output is selected from at least one of location, velocity, roll, pitch, and, according to the invention, yaw.

According to the invention, the output of the global positioning sensor 32 and IMU 31 is provided to the central processing unit 60 and may be pre-filtered with a signal processing filter before it is provided as input to the central processing unit 60, such as with a maximally flat magnitude filter, such as a Butterworth filter. The Butterworth filter is a type of signal processing filter designed to have an as flat as possible frequency response in a required passband, or a close approximation thereof, especially if enough filter elements are used. It is also referred to as a maximally flat magnitude filter. The filter preferably has a first order response roll off of >-20dB per octave, and multitudes thereof for the subsequent order filters. With the signal processing filters accuracies comparable to high end (expensive and complicated) positioning systems are obtained with the present system; in case of absence of signals the present system is at least one factor more accurate.

In an exemplary embodiment of the present device fused output of the global positioning sensor 32 and IMU 31 may be provided to a pose unit, and wherein also a physical location determined by the global positioning sensor 32 may be provided to the pose unit. Therewith the fused outputs, possibly being pre-filtered may be provided for further calculations and determining the various parameters.

In an exemplary embodiment of the present device the pose unit may provide output with respect to at least one of physical location, roll, pitch, yaw, velocity, and acceleration to the central processing unit. These outputs are used for precise determination of these parameters, amongst others.

In an exemplary embodiment of the present device the IMU may be adapted to align at least one internal mount axis with respect to the gravity axis of the earth, preferably automatically align. The IMU may be misaligned or get misaligned. In view of the precise measurement the internal axes are preferably realigned with respect to the gravity axis of the earth. This may be done manually, such as by using a user interface, or automatically. It is preferred to align when in rest.

In an exemplary embodiment of the present device the device is adapted to provide untethered dead reckoning.

In an exemplary embodiment of the present device the IMU may use a vehicle reference point (VRP) as reference for calculations, wherein the VRP is located in the center of a vehicles rear axis or axes. It has been found that by using such a precise VRP much better output can be generated. In addition also an internal IMU frame may correspond to the three (x,y,z) axes of the accelerometer and gyroscope, respectively. The x-axis may be considered to point towards a front of the vehicle, the y-axis to a left side of the vehicle, and the z-axis upwards.

In an exemplary embodiment of the present device at the most one input selector may be provided, preferably no input selector, and optionally an on/off selector. The input selector may be a capacitive sensor. The selector may be provided on either side of the device. The selector may provide switching between various data screens, paring with wireless devices such as a smartphone, and further functions. The selectors may be operated individually or simultaneously. As such the present device is accessible only and completely in a wireless mode. This provides improved flexibility in programming the device and in designing the device.

In an exemplary embodiment the present device may comprise an altimeter. In addition to position also an altitude of the use can be provided. Such is especially of interest when climbing or descending a slope, especially when also an inclination is provided.

In an exemplary embodiment the present device may comprise a user power indicator. The power (W) generated by a user is considered to be an important aspect when training the body.

In an exemplary embodiment the present device may comprise a user intensity determinator, such as at least one of a stroke determinator (such as when rowing), a peddle frequency determinator (such as when cycling), a step frequency determinator (such as when walking or running), and a heartbeat sensor. It is important to note that the present IMU is capable of functioning as one of the above determinators, that is without a need for further additional sensors.

In an exemplary embodiment the present device may be for a bicycle, for running, for rowing, or for skiing.

In an exemplary embodiment of the present device the display may have a width of 1-7 cm, preferably 2-5 cm, and a height of 2-10 cm, preferably 3-7 cm, and wherein the body may have a thickness of 0.5-2 cm, preferably 1-1.5 cm. The device is preferably small in view of wearability, but not too small in view of readability and amount of information on a display

In an exemplary embodiment of the present device the power source may provide a current of 1000-7500 mA, preferably 2000-5000 mA, preferably over a period of 1-48 hours, such as 2-16 hours. It is noted that some of the elements of the present device consume a relative large amount of energy which limits its use in time.

In an exemplary embodiment the present device may comprise at least one internal switch for changing content of the display. The internal switch may be addressed by a smart phone or the like.

In an exemplary embodiment the present device may comprise at least one of an information filter, an optimizer, and a noise reduction filter, such as a recursive least square filter, such as a Kalman filter, such as an extended Kalman filter, preferably embedded. By having a filter more accurate positioning etc. is provided, especially as typically information of more than one satellite is used, leading to inaccuracies between the information provided, which inaccuracies can be reduced by optimizing use of information. In addition noise can be reduced. Further it is preferred to use relatively quick filters in order to provide data more often, therewith improving amongst others tracking.

In an exemplary embodiment the present device may comprise a synchronizer. Therewith accurate fitting of various inputs can be achieved.

In an exemplary embodiment the present device may comprise an analog identifier, for determining a frequency of a GNSS signal with an accuracy of < ±100Hz, preferably < ±10 Hz, more preferably < ±1Hz, and/or for determining a phase of a GNSS signal with an accuracy of < ±1%, preferably < ±10⁻¹%, more preferably < ±10⁻²%. Therewith in improved accuracy up to ±1 m in determining location is obtained.

In an exemplary embodiment the present device may comprise a frequency filter, preferably a frequency filter with a bandwidth of ±100 kHz, more preferably ±10 kHz. Therewith a more accurate determination of a location is obtained.

In an exemplary embodiment the present device may comprise comprising a frequency selector, preferably an automatic frequency selector. Therewith a GNSS system can be selected and use can be made of more data improving an accuracy.

In an exemplary embodiment the present device may be detachable, such as detachable from a holder or a mount. The present display may be at angle of -10°-30° relative to the surface of the earth (in a frontward direction from the viewer), preferably -5°-20°, more preferably -2°-10°, such as -0°-5°. The present device may have a IP67 body, an IC, a memory of >2Gb, a battery, a 3" color-display, Gorilla glass, a Bluetooth antenna, a Gnss patch antenna, a Ublox EVA m8 navigation system, an IMU, a barometer, a clock, and two capacitive pressure sensors are shown. Herein all the hardware and software may be present to provide high-end functionalities. The software may be updated, such as wireless updated. Various interface may be present, as well as a website and an app. The (user) interface may be controllable by the app, the website the user, or a combination thereof. Basic function provides may be time, provided by the RTC, velocity and distance (by the UDR), cadence, hart beat rate and power (by the respective sensors and antenna ANT+), and height, temperature and inclination (by the barometer). For all basic function averages, integrals, derivatives, minimum and maximum values, totals, intervals, etc. may be provided. The data may be provided to a database, such as a cloud based database, such as Strava.

The one or more of the above examples and embodiments may be combined, falling within the scope of the invention.

### FIGURES

Figure 1: Schematic representation of a prior art device.
Figure 2: Exemplary device.
Figures 3a-b show schematics of the present physical parameters used.
Figure 4: Built up of a device.
Figure 5: comparative results.
Figure 6: mode of operation.

### DETAILED DESCRIPTION OF THE FIGURES

In the figures:
- 100: Wearable sports device
- 10: body
- 11: top part body
- 12: side/bottom part body
- 20: display
- 30: integrated circuit
- 31: IMU
- 32: GNSS
- 40: Antenna
- 42: accelerometer
- 43: gyroscope
- 44: least square filter
- 51: Display pinout
- 52: Ublox
- 60: CPU/Raspberry Pi
- 61: reset
- 70: battery
- 71: power switch
- 72: battery charging points
- 80: PCB

Figure 1. Schematic representation of a prior art device as detailed above. Therein a gyroscope 43, an accelerometer 42, a GNSS system 32, and a least square filter 44 are shown.

Figure 20 shows an example of the present device. Therein an IMU 30 is connected via a display pinout 51 to a display 20.

The display is connected to a CPU 60, which may be a Raspberry Pi especially when testing. A Ublox positioning unit 52 attached to an antenna 40 provides input to the CPU. The CPU may be reset by a hard reset 61. For power a battery 70, and optionally a battery charging unit with charging point 72 and a power switch 71 may be provided.

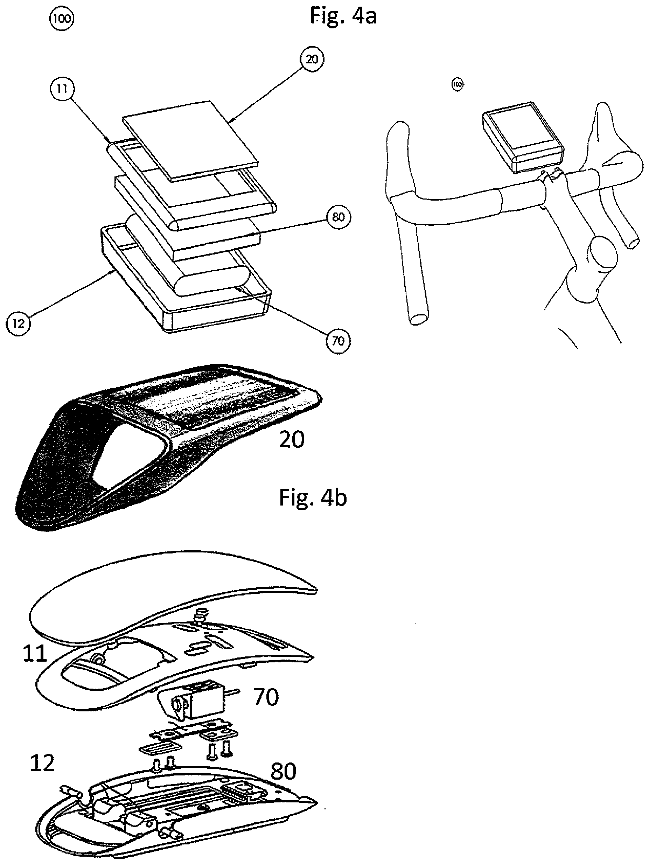

Figures 3a-b show schematics of the present physical parameters used. Therein three basic elements, pose, yaw *Ψ* and velo v are integrated within one sensor (or receiver), each typically having an *x*, *y* and *z* component. The GNSS and IMU are functionally coupled in view of position, course and velocity, and in view of yaw rate and amplitude. Some pre-processing of data may be provided, before transferring data to the processor. Thereafter an extended Kalman filter (EKF) is used to fuse data, and to reduce noise and to increase accuracy. Figure 3b shows schematical components as mentioned above for a bicycle model having two wheels, of which the left (front) wheel is rotatable over an angle α, optionally having an inclination δ. A position of a use is indicated in the middle. It has been found that a good bicycle model improves e.g. the accuracy and functionality of the present device significantly. Figures 4a,b shows an exemplary device 100. Therein a display 20, a top part of the body 11, a PCB 80 with all electric components integrated therein, a battery 70, and a side/bottom part of the body are shown. According to the invention, the device may be removably attached to a steering wheel of a bicycle. In figure 4b a device with a IP67 body, an IC, a memory of >2Gb, a battery, a 3" color-display, Gorilla glass, a Bluetooth antenna, a Gnss patch antenna, a Ublox EVA m8 navigation system, an IMU, a barometer, a clock, and two capacitive pressure sensors are shown.

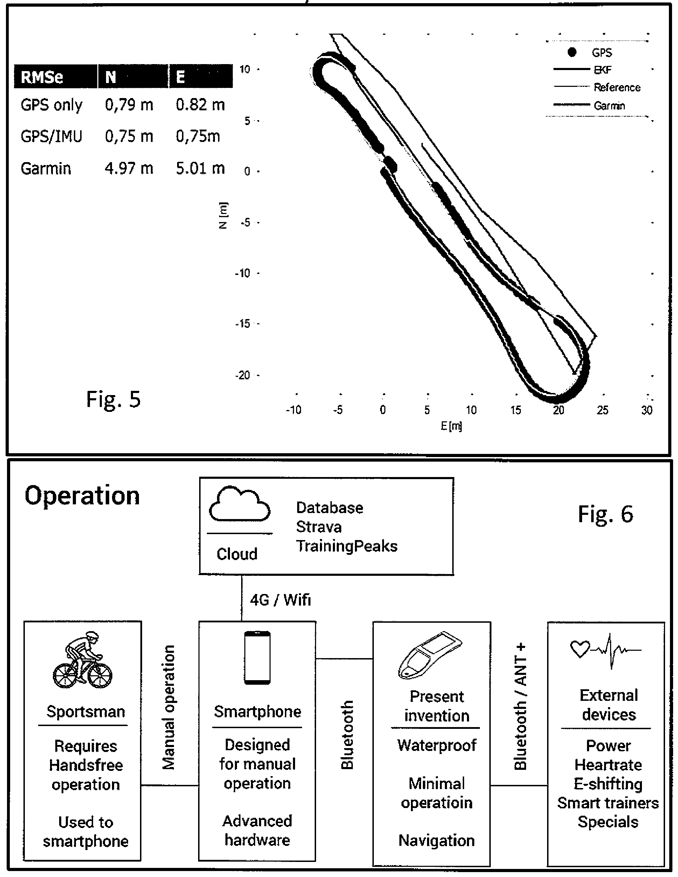

Figure 5: comparative results. Therein it can clearly be seen that the Garmin device is fully off track, the GPS device when shielded misses large parts of the track, the very expensive reference device functions fine, as does the present device (EKF), both being largely on track.

These results and especially accuracies (RMSe) are also summarized in the below table:

| | EKF with Ublox | Garmin Edge 1000 | Ublox UDR | GPSO EKF Ublox |
|---|---|---|---|---|
| Test results | 7P (SBAS) | Offline | Offline | PPP Online |
| Position | | | | |
| Flanders make | N: 0.75m. | N: 4.97m. | N: 1.28m. | N: 0.53 m. |
| building Open area | E: 0.75m . | E: 5.01m. | E: 1.06m. | E: 0.48m. |
| Kristalpark street | N: 1.97 m. | N: 3.40 m. | | N: 0.53 m. |
| Open area | E: 2.82 m. | E: 6.10 m. | - | E: 0.48m. |
| Kristalpark bridge | N: 1.39 m. | N: 3.45 m. | N: 2.14 m. | |
| Open area | E: 2.82 m. | E: 2.37 m. | E: 3.19 m. | - |
| Holven trees | N: 1.39 m. | N: 13.77 m. | N: 2.22 m. | |
| shielded area | E: 3.91 m. | E: 12.04 m. | E: 4.57 m. | - |
| Forest shiel- | N: 11.60 m. | N: 16.73 m. | N: 8.90 m. | |
| ded area | E: 5.49 m. | E: 11.66 m. | E: 4.22m. | - |

The root mean square deviation (RMSe) is determined from true values determined on the ground. A deviation is given in North (N) and East (E); the smaller the deviation the better. Except for the Garmin tests sensor fusion is applied.

Figure 6 shows a mode of operation and components. A cyclist having her hands on the steering wheel is shown.
1. The user which does not want to be occupied with the computer while exercising, hence operation is not desired. The user is well acquainted with operating a smartphone. This may occur before and after sporting. Then settings can be made, such as training profiles, routes, etc. can be set up, so that virtually nothing has to be done during sporting.
2. The mobile. The settings of the user are made in the app.
   This is converted into a piece of data that is transferred to the computer via bluetooth.
3. The computer. This is waterproof, has the hardware, gnss, imu, barometer, temperature sensor, etc. as well as computing power for filtering and fusing.
4. External sensors. The generic heart rate monitor, power meter. But also elements as an electronic switching system or communication with a smart trainer (tacx, Zwift), communication with ANT+ and/or bluetooth. ANT+ is a protocol in the same bandwidth as bluetooth and is a standardized communication protocol for sport sensors. These send their data to the computer.
5. The computer. Shows real-time all calculations on the screen.
   Can store data of 20 hours of sports in its own memory. When connected to the smartphone data may be transferred.
6. And the smartphone sends it back to a cloud database via the internet.

### EXAMPLE

The invention is further detailed by the accompanying example, which is exemplary and explanatory of nature and are not limiting the scope of the invention. To the person skilled in the art it may be clear that many variants, being obvious or not, may be conceivable falling within the scope of protection, defined by the present claims.

In an example the sensor of the present device is set as follows:
Sample rates: IMU: 100 Hz; GPS 10 Hz; SBG 100 Hz; Camera 1 FPS; Garmin Edge 1000 Hz
GPS settings: GPS only
IMU LSM9DSO sensitivity: Vehicle (accel x; and Gyro z; bicycle = vehicle.

In an example of a prototype the following components were used: Raspberry Pi3 Computer , Powerboost 1000C 1A Transformator, Lithium Ion Polymer Battery 3.7v 2500mAh Accu, 9-Dof sensor IMU, piTFT capacitive 320x240 TFT Touchscreen, Kingston microSD 64 GB memory chip, Ublox EVK -7p Gps receiver Ublox, PiCam 8MP Camera, and an Antenna ground plate.

In an example a solution for Untethered Dead Reckoning (UDR) allows improved navigation performance in places with GNSS-denied conditions as well as during short GNSS outages. UDR is based on Sensor Fusion Dead Reckoning (SFDR) technology, which integrates an Inertial Navigation System (INS) with GNSS measurements. The INS integrates angular rates and specific forces sensed by a 6-degrees-of-freedom Inertial Measurement Unit (IMU) containing a three-axis gyroscope and a three-axis accelerometer. The three-axis gyroscope and accelerometer sense specific forces and angular rates, respectively. Their axes are assumed to be mutually orthogonal. The INS computes position, velocity and attitude changes and can, once initialized, provide accurate navigation information. It is noted that an inertial-only navigation solution could degrade quickly with time due to the errors corrupting the IMU observations. The integration of the INS with GNSS measurements bounds these time-growing errors by calibrating the INS. The resulting integrated INS/GNSS filter, referred to as fusion filter in the sequel, has the advantages compared to standalone GNSS positioning, such as an improved navigation performance in GNSS-denied conditions, as errors caused by multipath or weak signal conditions are mitigated though the aid brought by the IMU, and it provides navigation solution during short GNSS-outages: the INS is configured to bridge short GNSS gaps which might be caused such as by tunnels or parking garages.

The IMU-frame corresponds to the IMU instrumental frame within which the accelerometers and gyroscopes are assumed to be orthogonally mounted. The IMU-frame is defined as follows:
The origin (O) is the origin of the IMU instrumental frame; The x-axis corresponds to the x-axis accelerometer/gyroscope sensing axis;
The y-axis corresponds to the y-axis accelerometer/gyroscope sensing axis;
The z-axis corresponds to the z-axis accelerometer/gyroscope sensing axis.

The installation-frame is a right-handed 3D Cartesian frame rigidly connected with the vehicle and is used to define the installation setup required for UDR navigation. The installation frame is defined as follows:
The origin (O) is the origin of the IMU-frame;
The x-axis points towards the front of the vehicle;
the y-axis points towards the left of the vehicle;
the z-axis completes the right-handed reference system by pointing up.

Gyroscope and accelerometer settings are set up and a sensor tim tagging is adapted.

An IMU-mount yaw angle (yaw) may correspond to the rotation around the installation-frame z-axis (vertical) required for aligning the installation-frame to the IMU-frame (yaw = 344.0 deg if the IMU-mount misalignment is composed of a single rotation around the installation-frame z-axis, i.e. with no IMU-mount roll and IMU-mount pitch rotation).

An IMU-mount pitch angle (pitch) may correspond to the rotation
around the installation-frame y-axis required for aligning the installation-frame to the IMU-frame (pitch = 26.5 deg if the IMU-mount alignment is composed of a single rotation around the installation-frame y-axis, i.e. with no IMU-mount roll and IMU-mount yaw rotation).

An IMU-mount roll angle (roll) may correspond to the rotation around the installation-frame x-axis required for aligning the installation-frame to the IMU-frame (roll = -23.5 deg if the IMU-mount misalignment is composed of a single rotation around installation-frame x-axis, i.e. with no IMU-mount pitch and IMU-mount yaw rotation).

## Claims

1. Wearable wireless untethered dead reckoning electronic sports device (100) for a bicycle comprising
(1) a weatherproof body, such as an IPxy body, in the body
(1a) a power source (70), in electrical connection with
(1b) an integrated circuit (30), the integrated circuit comprising a global positioning sensor (32) adapted to receive input from a global navigation satellite system, and an inertial measurement unit (IMU) (31), wherein the IMU is adapted to provide filtered output, and wherein the IMU and global positioning sensor are fused to provide a fused output, wherein the fused output comprises yaw, wherein in use a clock time of the global positioning sensor (32) and IMU (31) is synchronized and/or provided with a time mark,
(1c) a central processing unit (60) for processing data from the integrated circuit and for receiving input from the IMU and global navigation satellite system, the processing unit comprising
(1d) a transceiver for wireless communication with a remote device,
(1e) a memory, such as for storing data and for pre-use configuring the device and the information displayed,
(1f) a comparator for comparing physical changes, such as changes in speed, in altitude, in user power, in location, in distance, in user heart frequency, and in movement frequency,
(1g) a programming protocol, such as a user interface,
(1h) optionally a power booster,
(1i) an accelerometer (42) and/or a gyroscope (43),
(1j) optionally a damper,
(1k) optionally a thermometer,
(1l) a clock for generating signals in a frequency range of 1-10.000 Hz,
(1m) a magnetic compass,
(1n) optionally a barometer, and
(1o) an antenna (40), and
(2) integrated in the body a display (20), wherein the body has a detachable fixing means for attaching to

2. Sports device according to any of the preceding claims, wherein acceleration output of the global positioning sensor (32) and IMU (31) is fused, and/or wherein yaw output of the global positioning sensor (32) and IMU (31) is fused.

3. Sports device according to any of the preceding claims, wherein fused output of the global positioning sensor (32) and IMU (31) is provided to a pose unit, and wherein also a physical location determined by the global positioning sensor (32) is provided to the pose unit.

4. Sports device according to claim 9, wherein the pose unit provides output with respect to at least one of physical location, roll, pitch, yaw, velocity, and acceleration to the central processing unit.

5. Sports device according to any of the preceding claims, wherein the IMU is adapted to align at least one internal mount axis with respect to the gravity axis of the earth, preferably automatically align.

6. Sports device according to any of the preceding claims, wherein all sensor data together with GNSS data are combined, such as selected from integration of annular rates, specific forces, and IMU sensor data, wherein the IMU preferably has a three or more axis gyroscope and a three or more axis accelerometer.

7. Sports device according to any of the preceding claims, wherein the IMU uses a vehicle reference point (VRP) as reference for calculations, wherein the VRP is located in the center of a vehicles rear axis or axes.

8. Sports device according to any of the preceding claims, further comprising at least one of an information filter (44), an optimizer, and a noise reduction filter, such as a recursive least square filter, such as a Kalman filter, preferably embedded.

9. Sports device according to any of the preceding claims, further comprising at least one of at the most one input selector, preferably no input selector, an on/off selector, an altimeter, a user power indicator, a user intensity determinator, such as at least one of a stroke determinator, a peddle frequency determinator, a step frequency determinator, a heart beat sensor, an internal switch for changing the display, a synchronizer, an analog identifier, for determining a frequency of a GNSS signal with an accuracy of < ±100Hz, preferably < ±10 Hz, more preferably < ±1Hz, and/or for determining a phase of a GNSS signal with an accuracy of < ±1%, preferably < ±10-1%, more preferably < ±10-2 %, a frequency filter, preferably a frequency filter with a bandwidth of ±100 kHz, more preferably ±10 kHz, and a frequency selector, preferably an automatic frequency selector.

10. Sports device according to any of the preceding claims, wherein at least one of the display has a width of 1-7 cm, and a height of 2-10 cm, and wherein the body has a thickness of 0.5-2 cm, the power source provides a current of 1000-7500 mA, preferably over a period of 1-48 hours.

11. Use of a sports device according to any of the preceding claims, for location determination within an accuracy of ±2 m in for receiving shielded locations and within an accuracy of ±1 m in for receiving unshielded locations.

## Patentansprüche

1. Tragbare, drahtlose, ungebundene, elektronische Sportvorrichtung (100) zur Koppelnavigation für ein Fahrrad, umfassend
(1) ein wetterfestes Gehäuse, wie z. B. ein IPxy-Gehäuse, in dem Gehäuse
(1a) eine Stromquelle (70) in elektrischer Verbindung mit
(1b) einer integrierten Schaltung (30), wobei die integrierte Schaltung einen globalen Positionierungssensor (32), der so ausgelegt ist, dass er Eingaben von einem globalen Navigationssatellitensystem empfängt, und eine Trägheitsmesseinheit (IMU) (31) umfasst, wobei die IMU so angepasst ist, dass sie ein gefiltertes Ausgangssignal bereitstellt, und wobei die IMU und der globale Positionierungssensor zusammengeführt sind, um ein zusammengeführtes Ausgangssignal bereitzustellen, wobei das zusammengeführte Ausgangssignal Gieren umfasst, wobei im Gebrauch eine Uhrzeit des globalen Positionierungssensors (32) und der IMU (31) synchronisiert und/oder mit einer Zeitmarke bereitgestellt ist,
(1c) eine zentrale Verarbeitungseinheit (60) zum Verarbeiten von Daten von der integrierten Schaltung und zum Empfangen von Eingangssignalen von der IMU und dem globalen Navigationssatellitensystem, wobei die Verarbeitungseinheit umfasst
(1d) einen Transceiver zur drahtlosen Kommunikation mit einer entfernten Vorrichtung,
(1e) einen Speicher, wie zum Beispiel zum Speichern von Daten und zum Konfigurieren der Vorrichtung und der angezeigten Informationen vor der Benutzung,
(1f) einen Komparator zum Vergleichen physischer Änderungen, wie z. B. Änderungen der Geschwindigkeit, der Höhe, der Leistung des Benutzers, des Standorts, der Entfernung, der Herzfrequenz des Benutzers und der Bewegungsfrequenz,
ein Programmierprotokoll, wie etwa eine Benutzerschnittstelle,
(1h) optional einen Leistungsverstärker,
(1i) einen Beschleunigungsmesser (42) und/oder ein Gyroskop (43),
(1j) optional einen Dämpfer,
(1k) optional ein Thermometer,
(1l) einen Taktgeber zum Erzeugen von Signalen in einem Frequenzbereich von 1 - 10.000 Hz,
(1m) einen magnetischen Kompass,
(1n) optional ein Barometer, und
(1o) eine Antenne (40), und
(2) ein in das Gehäuse integriertes Display (20), wobei das Gehäuse eine abnehmbare Befestigungseinrichtung zum Anbringen an einem Lenkrad eines Fahrrads aufweist.

2. Sportvorrichtung nach einem der vorhergehenden Ansprüche, wobei die Beschleunigungsausgabe des globalen Positionierungssensors (32) und der IMU (31) zusammengeführt ist, und/oder wobei die Gierausgabe des globalen Positionierungssensors (32) und der IMU (31) zusammengeführt ist.

3. Sportvorrichtung nach einem der vorhergehenden Ansprüche, wobei die zusammengeführte Ausgabe des globalen Positionierungssensors (32) und der IMU (31) einer Pose-Einheit bereitgestellt wird, und wobei auch ein durch den globalen Positionierungssensor (32) ermittelter physischer Ort der Pose-Einheit bereitgestellt wird.

4. Sportvorrichtung nach Anspruch 9, wobei die Pose-Einheit eine Ausgabe in Bezug auf mindestens einen der Parameter physische Position, Rollen, Nicken, Gieren, Geschwindigkeit und Beschleunigung an die zentrale Verarbeitungseinheit bereitstellt.

5. Sportvorrichtung nach einem der vorhergehenden Ansprüche, wobei die IMU so ausgelegt ist, dass sie mindestens eine interne Befestigungsachse in Bezug auf die Schwerkraftachse der Erde ausrichtet, vorzugsweise automatisch ausrichtet.

6. Sportvorrichtung nach einem der vorhergehenden Ansprüche, wobei alle Sensordaten zusammen mit GNSS-Daten kombiniert werden, wie z. B. ausgewählt aus der Integration von Ringraten, spezifischen Kräften und IMU-Sensordaten, wobei die IMU vorzugsweise ein Drei- oder Mehrachsengyroskop und einen Drei- oder Mehrachsenbeschleunigungsmesser aufweist.

7. Sportvorrichtung nach einem der vorhergehenden Ansprüche, wobei die IMU einen Fahrzeugreferenzpunkt (VRP) als Referenz für Berechnungen verwendet, wobei der VRP in der Mitte einer Fahrzeugrückachse oder -achsen liegt.

8. Sportvorrichtung nach einem der vorhergehenden Ansprüche, ferner umfassend mindestens einen Informationsfilter (44), einen Optimierer und einem Rauschunterdrückungsfilter, wie einen rekursiven Least-Square-Filter, wie einem Kalman-Filter, vorzugsweise eingebettet.

9. Sportvorrichtung nach einem der vorhergehenden Ansprüche, ferner umfassend mindestens einen von höchstens einem Eingangswähler, vorzugsweise keinen Eingangswähler, einen Ein/AusWähler, einen Höhenmesser, einen Benutzerleistungsindikator, einen Benutzerintensitätsbestimmer, wie mindestens einem von einem Hubbestimmer, einen Trittfrequenzbestimmer, einen Schrittfrequenzbestimmer, einen Herzschlagsensor, einen internen Schalter zum Ändern der Anzeige, einem Synchronisator, einen analogen Identifikator, zur Bestimmung einer Frequenz eines GNSS-Signals mit einer Genauigkeit von < ±100 Hz, vorzugsweise < ±10 Hz, besonders bevorzugt < ±1Hz, und/oder zum Bestimmen einer Phase eines GNSS-Signals mit einer Genauigkeit von < ±1%, vorzugsweise < ±10-1 %, besonders bevorzugt < ±10-2 %, einen Frequenzfilter, vorzugsweise einen Frequenzfilter mit einer Bandbreite von ±100 kHz, besonders bevorzugt ±10 kHz, und einen Frequenzwähler, vorzugsweise einen automatischen Frequenzwähler.

10. Sportvorrichtung nach einem der vorhergehenden Ansprüche, wobei mindestens eines der Displays eine Breite von 1-7 cm und eine Höhe von 2-10 cm aufweist, und wobei das Gehäuse eine Dicke von 0,5-2 cm aufweist, die Stromquelle einen Strom von 1000-7500 mA bereitstellt, vorzugsweise über einen Zeitraum von 1-48 Stunden.

11. Verwendung einer Sportvorrichtung nach einem der vorhergehenden Ansprüche zur Standortbestimmung mit einer Genauigkeit von ±2 m in für den Empfang abgeschirmter Standorte und mit einer Genauigkeit von ±1 m in für den Empfang nicht abgeschirmter Standorte.

## Revendications

1. Dispositif de sport électronique (100) autonome, sans fil, vestimentaire, pour la navigation à l'estime, destiné à une bicyclette, comprenant
(1) un corps à l'épreuve des intempéries, tel qu'un corps IPxy, comprenant dans le corps
(1a) une source d'énergie (70) en connexion électrique avec
(1b) un circuit intégré (30), le circuit intégré comprenant un capteur de positionnement global (32) adapté pour recevoir une entrée d'un système mondial de navigation par satellite, et une unité de mesure inertielle (IMU) (31), l'IMU étant adaptée pour fournir une sortie filtrée, et dans lequel l'IMU et le capteur de positionnement global sont fusionnés pour fournir une sortie fusionnée, la sortie fusionnée comprenant un taux de lacet, dans lequel en cours d'utilisation, un temps d'horloge du capteur de positionnement global (32) et de l'IMU (31) est synchronisé et/ou pourvu d'un repère de temps,
(1c) une unité centrale de traitement (60) pour traiter des données provenant du circuit intégré et pour recevoir une entrée de l'IMU et du système mondial de navigation par satellite, l'unité de traitement comprenant
(1d) un émetteur/récepteur pour une communication sans fil avec un dispositif distant,
(1e) une mémoire, comme pour stocker des données et pour configurer le dispositif et les informations affichées avant l'utilisation,
(1f) un comparateur pour comparer des changements physiques, tels que des changements de vitesse, d'altitude, de puissance de l'utilisateur, d'emplacement, de distance, de fréquence cardiaque de l'utilisateur et de fréquence de mouvement,
(1g) un protocole de programmation, tel qu'une interface utilisateur,
(1h) en option un amplificateur de puissance,
(1i) un accéléromètre (42) et/ou un gyroscope (43),
(1j) en option un amortisseur,
(1k) en option un thermomètre,
(11) une horloge pour générer des signaux dans une plage de fréquence de 1 à 10 000 Hz,
(1m) une boussole magnétique,
(1n) en option un baromètre, et
(10) une antenne (40), et
(2) un affichage (20) intégré dans le corps, le corps présentant un moyen de fixation amovible à attacher au guidon d'une bicyclette.

2. Dispositif de sport selon l'une quelconque des revendications précédentes, dans lequel la sortie d'accélération du capteur de positionnement global (32) et de l'IMU (31) est fusionnée, et/ou dans lequel la sortie de lacet du capteur de positionnement global (32) et de l'IMU (31) est fusionnée.

3. Dispositif de sport selon l'une quelconque des revendications précédentes, dans lequel la sortie fusionnée du capteur de positionnement global (32) et de l'IMU (31) est fournie à une unité de pose, et dans lequel un emplacement physique déterminé par le capteur de positionnement global (32) est également fourni à l'unité de pose.

4. Dispositif de sport selon la revendication 9, dans lequel l'unité de pose fournit à l'unité centrale de traitement une sortie concernant au moins un élément parmi un emplacement physique, un taux de roulis, de tangage, de lacet, une vitesse et une accélération.

5. Dispositif de sport selon l'une quelconque des revendications précédentes, dans lequel l'IMU est adaptée pour aligner au moins un axe de montage interne par rapport à l'axe de gravité de la terre, de préférence pour l'aligner automatiquement.

6. Dispositif de sport selon l'une quelconque des revendications précédentes, dans lequel toutes les données de capteur ainsi que les données de GNSS sont combinées, telles que sélectionnées parmi l'intégration de taux annuels, de forces spécifiques et de données de capteur IMU, l'IMU présentant de préférence un gyroscope à trois axes ou plus et un accéléromètre à trois axes ou plus.

7. Dispositif de sport selon l'une quelconque des revendications précédentes, dans lequel l'IMU utilise un point de référence de véhicule (VRP) comme référence pour les calculs, le VRP étant situé au centre d'un axe ou des axes arrière d'un véhicule.

8. Dispositif de sport selon l'une quelconque des revendications précédentes, comprenant au moins un filtre d'informations (44), un optimiseur et un filtre de réduction de bruit, tel qu'un filtre des moindres carrés récursifs, tel qu'un filtre de Kalman, de préférence incorporé.

9. Dispositif de sport selon l'une quelconque des revendications précédentes, comprenant en outre au moins un élément parmi au plus un seul sélecteur d'entrée, de préférence aucun sélecteur d'entrée, un sélecteur marche/arrêt, un altimètre, un indicateur de la puissance de l'utilisateur, un dispositif de détermination de l'intensité de l'utilisateur, tel qu'au moins un élément parmi un dispositif de détermination de coup de pédale, un dispositif de détermination de fréquence de pédalage, un dispositif de détermination de fréquence de pas, un capteur de battement de coeur, un commutateur interne pour changer d'affichage, un dispositif de synchronisation, un identificateur analogique, pour déterminer une fréquence d'un signal GNSS avec une exactitude de < ±100 Hz, de préférence < ±10 Hz, de plus grande préférence < ±1Hz, et/ou pour déterminer une phase d'un signal GNSS avec une exactitude de < ±1 %, de préférence < ±101 %, de plus grande préférence < ±10-2 %, un filtre de fréquence, de préférence un filtre de fréquence ayant une bande passante de ±100 kHz, de plus grande préférence de ±10 kHz, et un sélecteur de fréquence, de préférence un sélecteur de fréquence automatique.

10. Dispositif de sport selon l'une quelconque des revendications précédentes, dans lequel au moins l'un des affichages présente une largeur de 1 à 7 cm et une hauteur de 2 à 10 cm, et dans lequel le corps présente une épaisseur de 0,5 à 2 cm, la source d'énergie fournit un courant de 1000 à 7500 mA, de préférence pendant une période de 1 à 48 heures.

11. Utilisation d'un dispositif de sport selon l'une quelconque des revendications précédentes pour la détermination d'un emplacement avec une précision de ±2 m dans des emplacements de réception protégés et avec une précision de ±1 m dans des emplacements de réception non protégés.
